# EUROPEAN PATENT SPECIFICATION

(11) **EP 2 609 539 B1**
(45) Date of publication and mention of the grant of the patent: **05.10.2016**
(21) Application number: 10856519.3
(22) Date of filing: 27.08.2010
(51) Int. Cl.: G06F 13/14, G06F 9/30, G06F 9/44, G06F 9/455, G06F 21/53, H04L 29/06, G06F 21/56

(54) **VIRTUAL HOTPLUG TECHNIQUES**
VIRTUELLE HOTPLUG-VERFAHREN
TECHNIQUES DE CONNEXION À CHAUD VIRTUELLES

(43) Date of publication of application: 03.07.2013
(73) Proprietor: Hewlett-Packard Development Company, L.P., Houston, TX 77070 (US)
(72) Inventor: BRAMLEY, Richard, Milpitas California 95035 (US); MANGALAMPALLI, Jayant, Milpitas California 95035 (US)
(74) Representative: Stöckeler, Ferdinand
(86) International application number: PCT/US2010/046886
(87) International publication number: WO 2012/026939

(56) References cited:
- JP-A- 2006 040 115
- JP-A- 2006 040 115
- US-A1- 2005 182 940
- US-A1- 2006 112 342
- US-A1- 2008 320 594
- US-A1- 2009 119 684
- US-A1- 2009 158 432

## Description

### FIELD OF THE INVENTION

The present invention generally relates to personal computers and devices sharing similar architectures and, more particularly relates to a system and corresponding method for controlling usage of connection(s) to telecommunications networks, especially networks that deploy internet Protocols and the like especially, but not essentially, within hypervisor and OS(s) (operating system(s)) context(s).

### BACKGROUND OF THE INVENTION

Modernly, malware on PCs (personal Computers) is increasingly convoluted and harmful. Anti-malware products have sprung up to combat the problem. In response, malware has begun to develop features that target the anti-malware products themselves so as to damage their effectiveness. In response, techniques have been developed to harden anti-malware products against attack.

One particular problem Is that anti-malware products commonly have a need to access updated information (for example data tables of virus signatures) and an efficient way of doing this is via Internet-based downloading. A need has existed to provide for such downloading and similar activities to occur without risk of the downloading process itself becoming compromised by a malware attack. There is a need to robustly control (particularly to alternately grant and disallow) access to communications, especially to and from Internet. In particular it is desirable to be able to deny access to the internet to ordinary OSes (Operating Systems) and to any programs that they load pending completion of the downloading (and perhaps of Integrity verification) of anti- malware information such as virus signatures.

Previously developed solutions address these issues only in part and there remains significant room for improvement,

### SUMMARY OF THE INVENTION

The invention provides a method according to claim 1 and an electronic device according to claim 15.

The disclosed invention includes, among other things, methods and techniques for controlling usage of communications facilities by program products such as, on the one hand, anti-malware products and on the other hand ordinary OSes (operating systems), applications programs and systems programs Including malware programs.

The present invention provides a method for operating a computer for communications control and also an apparatus that embodies the method. In addition program products and other means for exploiting the invention are presented.

According to an aspect of the present invention a method for controlling communications is disclosed, In an embodiment of the invention the method may include detecting an operable network facility such as a network device or service. Next, an OS or in another VM (Virtual Machine) access to the network facility may be denied, disallowed or prevented for a period of time until/unless a particular event may occur. During times that access is denied, a collage or aggregation of anti- malware information may be downloaded or otherwise formed and/or validated, certified etc.. Typically later, and perhaps after the integrity of the entirety of the anti- malware information has been assured, a previously denied program context may be granted access to communications, often including to the Internet.

Various techniques for granting and denying (etc.) communications access are disclosed, especially including utilization of features such as VMM (Virtual Machine Monitors, including hypervisor(s)) and hot plugging techniques such as those related to PCle (Peripheral Component Interconnect Express) bridge(s).

According to further aspects of the present invention, embodiments of the invention may provide for program products and electronic devices that employ the methods described above, and/or similar methods.

A further advantage and/or feature provided by or resulting from implementing the present invention is that it can provide anti-malware software products with mechanisms for further hardening against malware (and/or other) attack,

### BRIEF DESCRIPTION OF THE DRAWINGS

The aforementioned and related advantages and features of the present invention will become better understood and appreciated upon review of the following detailed description of the invention, taken in conjunction with the following drawings, which are incorporated in and constitute a part of the specification, illustrate an embodiment of the invention and wherein like numerals represent like elements, and in which:
FIG. 1 is a schematic block diagram of an electronic device configured to implement security functionality according to embodiments of the present invention;
FIG. 2 is a Sample ASL (ACPI Source Language) entry according to usage in an embodiment of the invention;
FIG, 3A and FIG. 3B show typical Registers used in an example bus controller chip that implements PCle bridge functions;
FIG. 4 is a flowchart illustrating the steps performed in implementing an embodiment of the present invention;
FIG. 5 shows how an exemplary embodiment of the invention may be encoded onto a computer medium or media; and
FIG. 6 shows how an exemplary embodiment of the invention may be encoded, transmitted, received and decoded using electro-magnetic waves.

### DETAILED DESCRIPTION OF THE INVENTION

The numerous components shown in the drawings are presented to provide a person of ordinary skill in the art a thorough, enabling disclosure of the present invention. The description of well known components is not included within this description so as not to obscure the disclosure or take away or otherwise reduce the novelty of the present invention and the main benefits provided thereby.

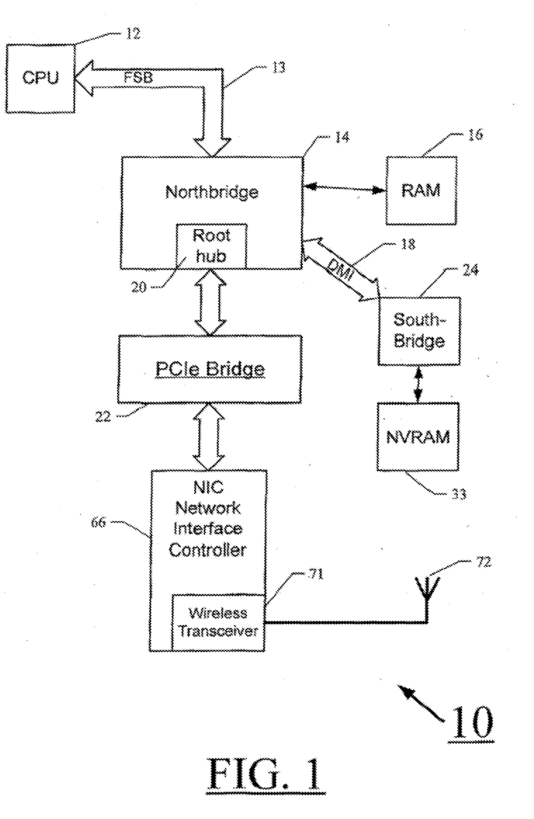

FIG. 1 is a schematic block diagram of an electronic device configured to implement the security functionality according to the present invention.

In an exemplary embodiment, the electronic device 10 may be implemented as a personal computer, for example, a desktop computer, a laptop computer, a tablet PC or other suitable computing device. Although the description outlines the operation of a personal computer, it will be appreciated by those of ordinary skill in the art, that the electronic device 10 may be implemented as a PDA, netbook, wireless communication device, for example, a cellular telephone, embedded controllers or devices, for example, set top boxes, printing devices or other suitable devices or combination thereof and suitable for operating or interoperating with the invention.

The electronic device 10 may include at least one processor or CPU (central Processing Unit) 12, configured to control the overall operation of the electronic device 10. Similar controllers or MPUs (Microprocessor Units) are commonplace. The processor 12 may typically be coupled to a bus controller 14 such as a Northbridge chip by way of a bus 13 such as a FSB (Front-Side Bus). The bus controller 14 may typically provide an interface for read-write system memory 16 such as RAM (random access memory).

The bus controller 14 may also be coupled to a system bus 18, for example a DMI (Direct Media Interface) in typical Intel® style embodiments. Coupled to the DMI 18 may be a so-called Southbridge controller chip 24. Also, typically, Southbridge chip 24 may also be coupled to a NVRAM (non-volatile random-access memory) 33

In an embodiment, the bus controller 14 may incorporate a PCIe (Peripheral Component Interconnect Express) root hub 20. PCIe root hub 20 in turn may connect to a PCIe Bridge 22. PCIe bridge may be incorporated into bus controller 14 or it may be discrete therefrom.

PCIe Bridge 22 typically connects to one or more PCIe peripherals. In an embodiment of the invention PCIe Bridge 22 connects to a NIC (Network interface Controller) 66 which may be a wireless NIC which drives a Wireless Transceiver 71. Wireless Transceiver 71 may operate in compliance with IEEE 802.11 or other suitable standards. Wireless Transceiver 71 will typically include an RF (Radio Frequency) circuit coupled to some form of radiating antenna 72.

In accordance with embodiments of the invention, a feature that may be desired in a general purpose computing environment that is vulnerable to attempted malware attacks could be to control closely the communications facility, The communications facility may be embodied, in part, by the NIC (Fig. 1, Ref. 66) or alternatively embodied as a software service or a system service (not shown in the figures) that utilizes communications equipment such as a NIC or other equipment. In particular, it may be desired to grant to anti-malware software applications access to the communications facility while in effective denying that same access (or perhaps any communications access) to OS (Operating System) and applications loaded and run under the control of the OS.

One previously developed solution provides for such a capability for wired Internet communications connects (and broad equivalents) and has been based on manipulating a PCI (Peripheral Component Interconnect) configuration space and correlated MMIO/PIO (Memory-mapped Input/Output and Programmed Input/Output) regions of wired NIC devices. One such implementation is hypervisor based and DomU (Domain Unprivileged) located programs are informed that (virtual) network devices are unavailable. (The meaning and usage of DomU and the related term Dom0 (Domain Privileged) are well known in the hypervisor arts).

In an exemplary embodiment of the invention it may be desired that in a hypervisor environment DomU hosts a main OS (and application programs subordinate thereto). Simultaneously, Dom0 must be allowed to have Internet connection(s) while a virus-pattern file (or other anti-malware information) is being downloaded into the Dom0 VM (Virtual machine) and stored securely in memory. Such an anti-virus pattern file may typically be subsequently communicated to DomU and applied using a part of an anti-malware application program designed to run in a DomU context. An example could be one of the well-known anti-virus applications such as is provided by Trend Micro Incorporated. Previously developed hypervisor based implementations exist for certain types of wired network connections but embodiments of the present invention are of more general applicability.

Attempts to apply similar configurations to wireless communications devices posed significant challenges. In contrast with wired NIC configurations, there is no small group of registers in typical wireless device(s) that could be virtualized so as to convey a surrogate device status to drivers in DomU that a communications device is not available to the respective VM. Moreover, for costly commercial reasons, sufficient documentation on the wireless device may not be easily available to implementers of generalized solutions.

Usage, for the present purpose, of RF_KILL switch (well known in the art) emulation was not considered to be a reasonable (possibly not even possible) approach since a typical EC (Embedded Controller chip) that controls an RF_KILL switch (or substantial equivalent) may directly drive the RF_OFF pin on the PCIe socket. Modern wireless controllers are commonly and usefully connected by a PCIe.

The typical EC command set was not considered to be a good target for implementation either; as there is insufficient standardization and/or open specifications; also there are too many variants to be a good choice for promiscuous adaptation. Also, all interface enablement features available for use by external physical controls (for example Fn-buttons or a wireless switch) were regarded as unsuitable to the present purpose for reason that they are also available to malware that operates in a DomU. Available in a DomU implies available to programs that run as Windows® application program - and much malware runs that way.

The vulnerabilities described above pose particular risk immediately after suspend/resume cycles and hibernate/resume cycles wherein wireless devices typically have previously been initialized and used, such as by DomU resident device drivers. Drivers maintain internal states of the devices at the time of suspend and hibernate and may fail to work reliably if the state of device at the time of resume is unexpected (i.e. anything but the same as the stored state).

Embodiments of the invention may use PCIe hot-plug and hot-unplug device status services. The use of hot-plug in connection with PCIe is well-known in the art. One approach, within the general scope of the invention, is to substitute or surrogate wireless NIC device status seen by DomU (i.e. a hypervisor-generated virtual wireless NIC device status). The virtual wireless NIC device status may initially be that which would apply if the device had not yet been plugged in (i.e. as reporting "no device present" in the corresponding virtualized PCIe slot).

This condition (no device plugged in) may be sustained at least until after virus pattern download (or other anti-malware activity or the like) is completed. However the invention is not limited to a strictly anti-malware context and may find broader application. Thus, the wireless device may appear to DomU by becoming hot-plugged for an initial first time only when DomU seeks to get Internet connection and such connection has become allowed. Of course, in this context, the hot-plug addition by DomU is merely virtual and does not reflect an actual addition or activation of wireless hardware.

Hot plug and hot unplug is implemented where real PCIe bridges are used and conform to formally approved industry standardized specifications. This permits an implementation to be created with confidence that it will be robust and durable.

Dem0 or Domain Zero is a term used in the hypervisor arts to refer to the "privileged domain", which is typically embodied as a VM (Virtual Machine) that has greater privilege than all other domains or VMs (known as DomU for "unprivileged domain"). Within Dem0 lies a hypervisor-capable OS (operating system) kernel such as a Linux® kernel program, upon which the applications programs for running on that kernel may be found.

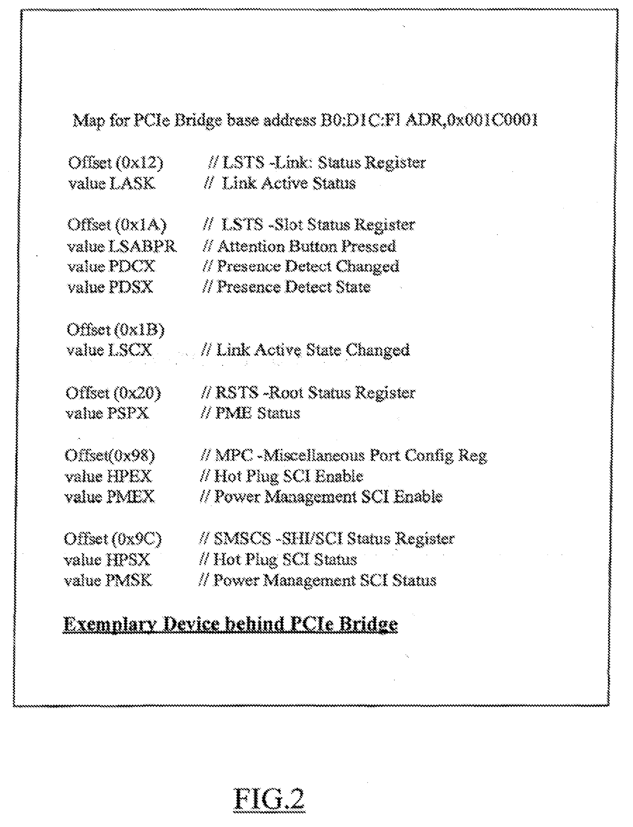

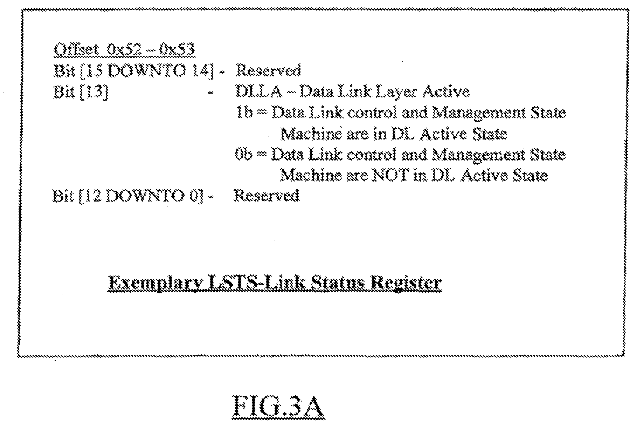

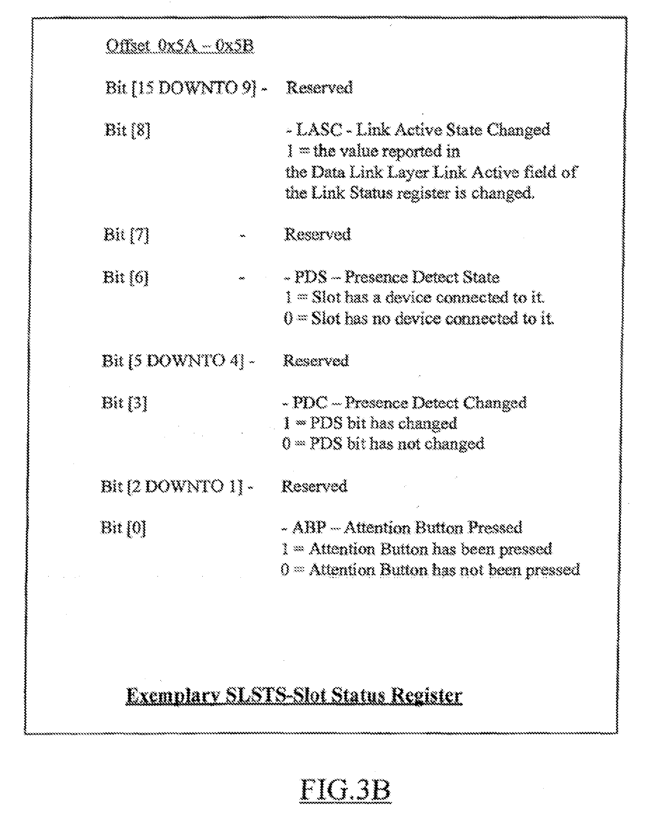

FIG. 2 is a Sample ASL (ACPI (Advanced Configuration and Power Interface) Source Language) entry according to usage in an embodiment of the invention. The use of ASL is well known in the BIOS (Basic Input Output System) arts. FIG. 3A and FIG. 3B show typical Registers used in an example bus controller chip that implements PCIe bridge functions.

Taken together FIGS. 2, 3A and 3B provide exemplary encodings for use with commonly found integrated circuits (chips) used as bus controllers in computers. The Intel® SCH (System Controller Hub) is a typical example but the invention is not limited to that device.

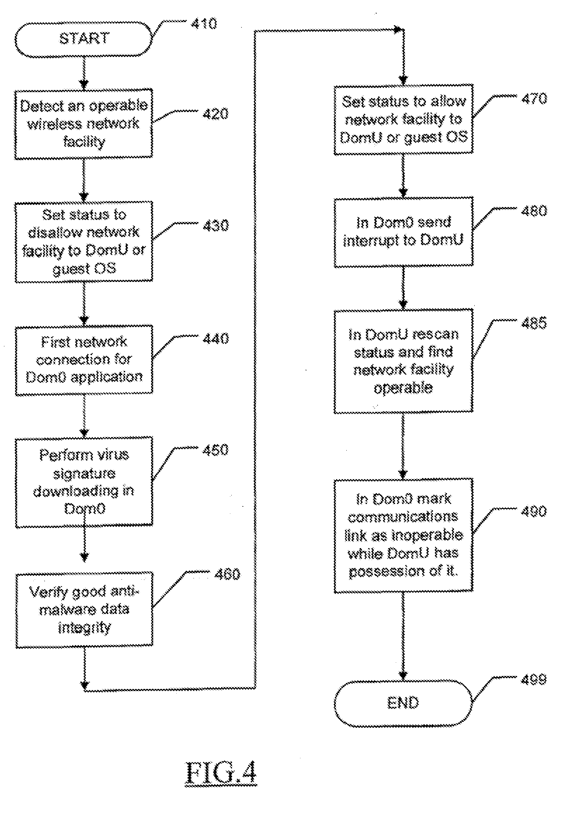

FIG. 4 is a flowchart illustrating the steps performed in implementing an one embodiment of the present invention and conforming, in large part, to the description of the virtualized PCIe Hot plug and unplug techniques given above.

An overview of the processes involved that places the method in a readily understood context follows; followed by a stepwise description that focuses more on the inventive aspects of the method of an exemplary embodiment of the invention. It will be understood by persons of ordinary skill in the art that many of the programs used to implement embodiments of the invention will need to be implemented, in part, as part of the computer BIOS and in further part may also need to be incorporated in hypervisor code.

An early step as the system comes up from start (bootload) or resume (from low power sleeping states) is to make the device appear to be unplugged from the viewpoint of any/all programs resident in DomU. This may involve PCIe Bridge initialization of a real or virtual bridge with Hot-Plugging capabilities.

The wireless NIC used in the example being described is either connected via a real PCIe bridge or the hypervisor virtualizes the wireless controller as though it were located behind a (virtual) PCIe bridge. The internal (virtualizable) state of the Bridge is maintained by QEMU and is initialized to an "UNPLUG - NOT_DETECTED", value which implies that the device "unplug" may not yet have been detected by any program in a DomU context. QEMU is an open source processor emulator well known in the hypervisor arts; it does not appear to be an abbreviation or mnemonic.

Next, the PCIe's virtual (QEMU aware) Slot Status Register (PCIe configuration space) is updated to reflect this by showing the PDS (Presence Detect State) as clear. Before long a program in a DomU context will read this and become convinced that no virtual wireless NIC device is presently attached (plugged in).

Also in hypervisor QEMU support and/or BIOS, a virtual PDC (Presence Detect Changed) bit in the virtual Slot Status Register is set to indicate device presence has changed and an IRQ (Interrupt Request) is issued to cause DomU to initiate a re-scan of bridge status. Causing a rescan (typically from within an ISR - interrupt service routine) is particularly robust in a context of recovery from hibernation. At this point the internal bridge state maintained by QEMU may then updated to "UNPLUG - DETECTED" status or similar or equivalent.

Other hardware controller implementations may use other mechanisms for notifying status changes, for example with some PCIe controller chips is defined a DLLA (Data Link Layer Active) field within a LSTS (Link Status Register) and an associated LSCX (Link Active State changed) with associated events. Refer to Figures 2 and 3A for information on one exemplary placing of DLLA and LSCX.

Next, LASC (Link Active State Change) bit virtual Slot Status Register is presented to DomU as set so that DomU will check for link active prior to initiating any possible configuration cycles to the hot plugged device. This completes the virtual unplug process.

DomU optionally writes the IRQ value in PCI's IRQ register (0x3c), which completes the unplug cycle. QEMU's internal state is changed to UNPLUG DONE.

When an external criterion is fulfilled (such as completion of a particular stage of an anti-malware program) a QEMU Hot-Plug process takes place. To QEMU this just looks like a change of status, but to an OS in DomU it looks like a hot plug status event, and to hypervisor the total action amounts to generating and fielding a virtual (or virtualized) hot plug event. PDS is used (as before in unplugging) to initiate a bridge rescan. At that point DomU "sees" that PDS status changed, so it will rescan the bridge to see which buses on the bridge has any device that is recently (apparently, virtually) connected. Since the Configuration space already has details about the subordinate bus of wireless on the bridge (which DomU has not read until this present context), DomU starts fully scanning the new bus whereupon it will detect the virtual wireless NIC as being operable.

One example will now be described in more specific terms, but many variants in implementation are possible within the general scope of the invention. In step 410, in the exemplary method, entry is made into a method that is part of the exemplary embodiment of the invention. In particular, the wireless facility may be a device driver interface to a particular type of hardware wireless network controller, or it may be a more general network software interface such as the well-known NDIS (Network Driver Interface Service).

At step 420, hypervisor (for example in a modified variant of QEMU) detects an operable wireless network facility.

At step 430, hypervisor set status to disallow network facility to DomU (or a similarly situated guest OS). At step 440, a first network connection is made for use by a Dom0 application. At step 450, the Dom0 application performs virus signature downloading entirely within the Dom0 context. Other processes may proceed in DomU and/or the guest OS but since the NIC is not visible these cannot conflict with, nor compromise the Dom0 application.

At step 460, the Dom0 application verifies a good anti-malware data integrity. At step 470, hypervisor sets QEMU based status thus allowing network facilities to DomU or guest OS.

At step 480, In Dom0 send IRQ or other interrupt to DomU. And in response thereto, at step 485 DomU rescans status and finds network facility (virtual NIC hardware or software service) to be operable.

Next, at step 490. In Dom0 marks the communications link as inoperable to Dom0 applications while DomU has possession of it. In a hypervisor context ownership of a communications link may of course be shared or may be passed to and fro according to the applications in use. But in at least some implementations it will be denied to Dom0 for at least part of the time.

And at step 499 the method ends.

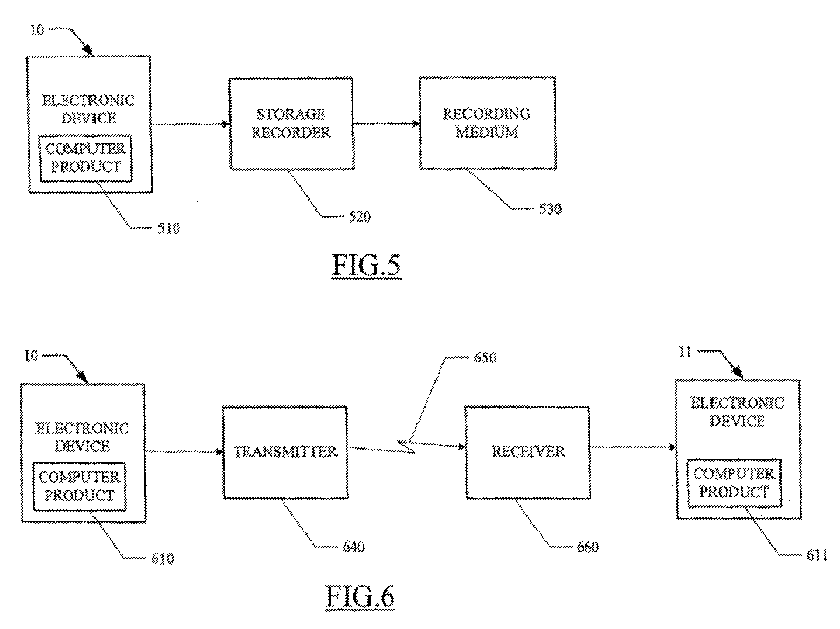

With regards to FIG. 5, computer instructions to be incorporated into in an electronic device 10 may be distributed as manufactured firmware and/or software computer products 510 using a variety of possible media 530 having the instructions recorded thereon such as by using a storage recorder 520. Often in products as complex as those that deploy the invention, more than one medium may be used, both in distribution and in manufacturing relevant product. Only one medium is shown in FIG. 5 for clarity but more than one medium may be used and a single computer product may be divided among a plurality of media.

FIG. 6 shows how an exemplary embodiment of the invention may be encoded, transmitted, received and decoded using electro-magnetic waves.

With regard to FIG. 6, additionally, and especially since the rise in Internet usage, computer products 610 may be distributed by encoding them into signals modulated as a wave. The resulting waveforms may then be transmitted by a transmitter 640, propagated as tangible modulated electro-magnetic carrier waves 650 and received by a receiver 660. Upon reception they may be demodulated and the signal decoded into a further version or copy of the computer product 611 in a memory or other storage device that is part of a second electronic device 11 and typically similar in nature to electronic device 10. In this way one manufactured product (a particularly encoded modulated electro-magnetic carrier wave) may be used to form a derivative manufacture, for example, a ROM (Read-Only Memory) resident BIOS (Basic Input-Output System) according to an embodiment of the invention.

Other topologies devices could also be used to construct alternative embodiments of the invention.

The embodiments described above are exemplary rather than limiting and the bounds of the invention should be determined from the claims. Although preferred embodiments of the present invention have been described in detail hereinabove, it should be clearly understood that many variations and/or modifications of the basic inventive concepts herein taught which may appear to those skilled in the present art will still fall within the scope of the present invention, as defined in the appended claims.

## Claims

1. A method of operating a computer comprising:
executing within a first context selected from a first list consisting of a first VM (virtual machine) and a first VMM (Virtual Machine Monitor), first instructions that detect (420) a state of operability of an operable network facility selected from a list consisting of a network device and a network service; and
while the state of operability persists, executing further instructions within the first context to disallow (430) a usage of the network facility, wherein the usage is requested by executing still further instructions within a second context selected from a second list consisting of a second VM and a host OS (Operating System), wherein access to the network facility is granted to the first context.

2. The method of claim 1 wherein:
the second context is a DomU (domain unprivileged); and
the first VM is a DomO (domain zero/privileged) or the VMM comprises a hypervisor.

3. The method of claim 1 further comprising:
responsive to a detection of a state change, executing instructions within the first context to make a first grant of usage (470) of the network facility to still further instructions executing within the second context.

4. The method of claim 3 still further comprising:
while the first grant of usage of the network facility persists, executing instructions to deny (490) usage of the network facility to instructions executing within the first context.

5. The method of claim 3 wherein:
the state change is responsive to instructions executed in connection with an acquisition of anti-malware information.

6. The method of claim 5 wherein:
the acquisition is an internet-based downloading activity (450).

7. The method of claim 1 wherein:
the network facility is a NIC (network interface controller) or an NDIS (Network Driver Interface Service) compliant service routine.

8. The method of claim 1 wherein:
the executing further instructions within the first context further comprise acting to provide a surrogate Slot Status Register for a virtual PCIe (Peripheral Component interconnect Express) bridge.

9. The method of claim 1 wherein:
the executing further instructions within the first context further comprise acting to provide a surrogate signal selected from a list consisting of a PDC (presence detect change), a PDS (presence detect state), an ABP (attention button pressed) or a LASC (link active state change).

10. The method of claim 1 wherein:
the executing further instructions within the first context further comprise acting to provide a DLLA (data link layer active) event.

11. The method of claim 1 wherein:
the executing still further instructions within a second context comprise executing an ISR (interrupt service routine) responsive to a virtualized hot plug event, the ISR (interrupt service routine) further comprising executing instructions to scan a PCIe (Peripheral Component Interconnect Express) bridge.

12. The method of claim 3 further comprising:
receiving (450), within the first VM (virtual machine), an aggregation of anti-malware information before the first grant of usage of the network facility to the still further instructions executing within the second context.

13. The method of claim 1 further comprising:
virtualizing at least a part of the network facility to produce a virtual device or a virtual network service, and
utilizing the virtual device or the virtual network service by executing instructions in the second context.

14. The method of claim 3 further comprising:
executing instructions to set a surrogate HPCE (hot plug system control interrupt enable) status maintained by the VMM (virtual machine monitor).

15. An electronic device apprising:
a controller (12), and
a memory (16, 33) having instructions encoded therein, the instructions when executed by the controller (12) cause said controller (12) to operate by steps comprising the acts of:
executing within a first context selected from a first list consisting of a first VM (virtual machine) and a first VMM (Virtual Machine Monitor), first instructions that detect (420) a state of operability of an operable network facility selected from a list consisting of a network device and a network service; and
while the state of operability persists, executing further instructions within the first context to disallow (430) a usage of the network facility, wherein the usage is requested by executing still further instructions within a second context selected from a second list consisting of a second VM and a host OS, wherein access to the network facility is granted to the first context.

## Patentansprüche

1. Verfahren zum Betreiben eines Computers, Folgendes umfassend:
Ausführen in einem ersten Kontext, ausgewählt aus einer ersten Liste bestehend aus einer ersten VM (Virtual Machine - virtuellen Maschine) und einem ersten VMM (Virtual Machine Monitor - Überwachungsgerät einer virtuellen Maschine), von ersten Anweisungen, die einen Betriebsfähigkeitszustand einer betriebsfähigen Netzwerkeinrichtung, ausgewählt aus einer Liste bestehend aus einem Netzwerkgerät und einem Netzwerkdienst, bestimmen (420); und,
während der Betriebsfähigkeitszustand besteht, Ausführen weiterer Anweisungen in dem ersten Kontext, um ein Nutzen der Netzwerkeinrichtung nicht zuzulassen (430), wobei das Nutzen durch das Ausführen von noch weiteren Anweisungen in einem zweiten Kontext, ausgewählt aus einer zweiten Liste bestehend aus einer zweiten VM und einem Host-OS (Operating System - Betriebssystem), angefordert wird, wobei dem ersten Kontext ein Zugriff auf die Netzwerkeinrichtung gewährt wird.

2. Verfahren nach Anspruch 1, wobei:
der zweite Kontext eine DomU (unprivilegierte Domäne) ist; und
die erste VM eine DomO (Null-/privilegierte Domäne) ist oder das VMM einen Hypervisor umfasst.

3. Verfahren nach Anspruch 1, ferner Folgendes umfassend:
als Reaktion auf ein Bestimmen einer Zustandsänderung, Ausführen von Anweisungen in dem ersten Kontext, um noch weiteren Anweisungen, die in dem zweiten Kontext ausgeführt werden, eine erste Nutzungsgenehmigung (470) der Netzwerkeinrichtung zu erteilen.

4. Verfahren nach Anspruch 3, noch ferner Folgendes umfassend:
während die erste Nutzungsgenehmigung der Netzwerkeinrichtung besteht, Ausführen von Anweisungen, um Anweisungen, die in dem ersten Kontext ausgeführt werden, das Nutzen der Netzwerkeinrichtung zu verweigern (490).

5. Verfahren nach Anspruch 3, wobei:
die Zustandsänderung auf Anweisungen, die in Verbindung mit einem Erfassen von Antischadsoftware-Informationen ausgeführt werden, reagiert.

6. Verfahren nach Anspruch 5, wobei:
das Erfassen eine internetgestützte Herunterladeaktivität (450) ist.

7. Verfahren nach Anspruch 1, wobei:
die Netzwerkeinrichtung eine mit einer NIC (Network Interface Controller - Netzwerk-Schnittstellen-Steuereinheit) oder mit einem NDIS (Network Driver Interface Service - Netzwerktreiberschnittstellendienst) konforme Dienstroutine ist.

8. Verfahren nach Anspruch 1, wobei:
das Ausführen weiterer Anweisungen in dem ersten Kontext ferner ein Wirken zum Bereitstellen eines Ersatz-Slot-Status-Registers für eine virtuelle PCIe(Peripheral Component Interconnect Express - Peripheriekomponentenzwischenverbindungs-Express)-Brücke umfasst.

9. Verfahren nach Anspruch 1, wobei:
das Ausführen weiterer Anweisungen in dem ersten Kontext ferner ein Wirken zum Bereitstellen eines Ersatzsignals, ausgewählt aus einer Liste bestehend aus einer PDC (Presence Detect Change - Vorliegen-Bestimmungsänderung), einem PDS (Presence Detect State - Vorliegen-Bestimmungszustand), einer ABP (Attention Button Pressed - gedrückte Aufmerksamkeitstaste) oder einer LASC (Link Active State Change - Verbindungs-Aktiv-Zustandsänderung), umfasst.

10. Verfahren nach Anspruch 1, wobei:
das Ausführen weiterer Anweisungen in dem ersten Kontext ferner ein Wirken zum Bereitstellen eines DLLA(Data Link Layer Active - aktive Datenverbindungsschicht)-Ereignisses umfasst.

11. Verfahren nach Anspruch 1, wobei:
das Ausführen noch weiterer Anweisungen in einem zweiten Kontext ein Ausführen einer ISR (Interrupt Service Routine - Unterbrechungsdienstroutine) als Reaktion auf ein virtualisiertes Hot-Plug-Ereignis umfasst, wobei die ISR (Unterbrechungsdienstroutine) ferner ein Ausführen von Anweisungen zum Scannen einer PCIe(Peripheriekomponentenzwischenverbindungs-Express)-Brücke umfasst.

12. Verfahren nach Anspruch 3, ferner Folgendes umfassend:
Empfangen (450), in der ersten VM (virtuellen Maschine), einer Aggregation von Antischadsoftware-Informationen vor der ersten Nutzungsgenehmigung der Netzwerkeinrichtung für die noch weiteren Anweisungen, die in dem zweiten Kontext ausgeführt werden.

13. Verfahren nach Anspruch 1, ferner Folgendes umfassend:
Virtualisieren wenigstens eines Teils der Netzwerkeinrichtung zum Erzeugen eines virtuellen Geräts oder eines virtuellen Netzwerkdienstes und
Verwenden des virtuellen Geräts oder des virtuellen Netzwerkdienstes durch Ausführen von Anweisungen in dem zweiten Kontext.

14. Verfahren nach Anspruch 3, ferner Folgendes umfassend:
Ausführen von Anweisungen zum Einstellen eines Ersatz-HPCE(Hot Plug System Control Interrupt Enable - Hot-Plug-System-Steuer-Unterbrechungs-Aktivierung)-Status, der von dem VMM (Überwachungsgerät einer virtuellen Maschine) verwaltet wird.

15. Elektronisches Gerät, das Folgendes benachrichtigt:
eine Steuerung (12) und
einen Speicher (16, 33) mit darin codierten Anweisungen, wobei die Anweisungen, wenn sie von der Steuerung (12) ausgeführt werden, verursachen, dass die Steuerung (12) in Schritten betrieben wird, die die folgenden Maßnahmen umfassen:
Ausführen in einem ersten Kontext, ausgewählt aus einer ersten Liste bestehend aus einer ersten VM (virtuellen Maschine) und einem ersten VMM ( - Überwachungsgerät einer virtuellen Maschine), von ersten Anweisungen, die einen Betriebsfähigkeitszustand einer betriebsfähigen Netzwerkeinrichtung, ausgewählt aus einer Liste bestehend aus einem Netzwerkgerät und einem Netzwerkdienst, bestimmen (420); und,
während der Betriebsfähigkeitszustand besteht, Ausführen weiterer Anweisungen in dem ersten Kontext, um ein Nutzen der Netzwerkeinrichtung nicht zuzulassen (430), wobei das Nutzen durch das Ausführen von noch weiteren Anweisungen in einem zweiten Kontext, ausgewählt aus einer zweiten Liste bestehend aus einer zweiten VM und einem Host-OS, angefordert wird, wobei dem ersten Kontext ein Zugriff auf die Netzwerkeinrichtung gewährt wird.

## Revendications

1. Procédé d'utilisation d'un ordinateur, comprenant :
l'exécution, dans un premier contexte choisi dans une première liste constituée d'une première VM (machine virtuelle) et d'un premier VMM (moniteur de machine virtuelle), de premières instructions qui détectent (420) un état d'efficacité opérationnelle d'une installation à réseau utilisable choisi dans une liste constituée d'un dispositif en réseau et un service en réseau ; et
pendant que l'état d'efficacité opérationnelle persiste, l'exécution d'autres instructions dans le premier contexte pour désactiver (430) l'usage de l'installation en réseau, l'usage étant demandé par l'exécution d'autres instructions dans un deuxième contexte choisi dans une deuxième liste constituée d'une deuxième VM et d'un OS (système d'exploitation) hôte, l'accès à l'installation de réseau étant attribué au premier contexte.

2. Procédé selon la revendication 1, dans lequel :
le deuxième contexte est un DomU (domaine non privilégié) ; et
la première VM est un DomO (domaine zéro/privilégie) ou le VMM comprend un hyperviseur.

3. Procédé selon la revendication 1, comprenant en outre :
en réponse à une détection d'un changement d'état, l'exécution d'instructions dans le premier contexte pour faire une première autorisation d'usage (470) de l'installation de réseau à des instructions davantage supplémentaires s'exécutant dans le deuxième contexte.

4. Procédé selon la revendication 3, comprenant en outre :
tandis que la première autorisation d'usage de l'installation de réseau persiste, l'exécution d'instructions pour empêcher (490) l'usage de l'installation de réseau pour les instructions s'exécutant dans le premier contexte.

5. Procédé selon la revendication 3, dans lequel :
le changement d'état a lieu en réponse aux instructions exécutées en lien avec une acquisition d'informations anti-malware.

6. Procédé selon la revendication 5, dans lequel :
l'acquisition est une activité de téléchargement basée sur Internet (450).

7. Procédé selon la revendication 1, dans lequel :
l'installation de réseau est un NIC (contrôleur d'interface de réseau) ou un sous-programme de service conforme au NDIS (service d'interface de pilote de réseau).

8. Procédé selon la revendication 1, dans lequel :
l'exécution d'autres instructions dans le premier contexte comprend en outre le fait d'agir pour obtenir un registre de statut de fente pour un pont virtuel de PCIe (interconnexion expresse de composant périphérique).

9. Procédé selon la revendication 1, dans lequel :
l'exécution d'autres instructions dans le premier contexte comprend en outre le fait d'agir pour produire un signal de remplacement choisi dans une liste constituée d'un PDC (variation due à la détection d'une présence), d'un PDS (état de détection de présence), d'un ABP (bouton d'attention appuyé) ou d'un LASC (changement d'état actif de lien).

10. Procédé selon la revendication 1, dans lequel :
l'exécution d'autres instructions dans le premier contexte comprend en outre l'activation pour obtenir un événement de type DLLA (couche de liaison de données active).

11. Procédé selon la revendication 1, dans lequel :
l'exécution d'instructions davantage supplémentaires dans un deuxième contexte comprend l'exécution d'un ISR (sous-programme de service d'interruption) en réponse à un événement virtualisé de connexion à chaud, l'ISR (sous-programme de service d'interruption) comprenant en outre l'exécution d'instructions pour balayer un pont de PCIe (interconnexion expresse de composant périphérique).

12. Procédé selon la revendication 3, comprenant en outre :
la réception (450), dans la première VM (machine virtuelle), d'une agrégation d'informations anti-malware avant la première autorisation d'usage de l'installation de réseau aux autres informations s'exécutant dans le deuxième contexte.

13. Procédé selon la revendication 1, comprenant en outre :
la virtualisation d'au moins une partie de l'installation de réseau pour produire un dispositif virtuel ou un service de réseau virtuel, et
l'utilisation du dispositif virtuel ou du service de réseau virtuel par exécution d'instructions dans le deuxième contexte.

14. Procédé selon la revendication 3, comprenant en outre :
l'exécution d'instructions pour établir un statut de HPCE (interruption de commande de système de connexion à chaud) de remplacement maintenu par le VMM (moniteur de machine virtuelle).

15. Dispositif électronique comprenant :
un contrôleur (12) et
une mémoire (16, 33) contenant des instructions codées, les instructions amenant le contrôleur (12), quand elles sont exécutées par ledit contrôleur (12) à fonctionner par étapes comprenant les actions suivantes :
l'exécution, dans un premier contexte sélectionné à partir d'une première liste constituée d'une première VM (machine virtuelle) et d'un premier VMM (moniteur de machine virtuelle), de premières instructions qui détectent (420) un état d'efficacité opérationnelle d'une installation utilisable de réseau choisie dans une liste constituée d'un dispositif en réseau et d'un service en réseau ; et
alors que l'état d'efficacité opérationnelle existe, l'exécution d'autres instructions dans le premier contexte pour désactiver (430) un usage de l'installation en réseau, l'usage étant demandé par l'exécution d' instructions davantage supplémentaires dans un deuxième contexte choisi dans une deuxième liste constituée d'une deuxième VM et d'un OS hôte, l'accès à l'installation en réseau étant attribué au premier contexte.
